# EUROPEAN PATENT APPLICATION

(11) **EP 3 070 116 A1**
(43) Date of publication of application: **21.09.2016**
(21) Application number: 15183029.6
(22) Date of filing: 28.08.2015
(51) Int. Cl.: C08J 5/06, C08J 5/24, B29B 15/12, B29B 15/14

(54) **PRE-IMPREGNATED COMPOSITE MATERIAL**

(30) Priority: 16.03.2015 SG 10201502009X
(71) Applicant: Ho, Ha Fee, Hong Kong (HK)
(72) Inventor: HO, Ha Fee, Hong Kong (HK); HO, Hok Cheung, Hong Kong (CN)
(74) Representative: Groth, Wieland

(57) **Abstract**

A pre-impregnated composite material comprises structural fibres that are attached to each other in the form of a thread, the structural fibres being impregnated with resin. The pre-impregnated composite material further comprises a boundary layer that encloses circumference of the thread. The boundary layer is adhered to the circumference of the thread for reinforcement.

## Description

The present application relates to pre-impregnated (pre-preg) composite materials. The application also relates methods of making, modifying, incorporating, integrating, and using the pre-impregnated composite materials. The pre-impregnated composite materials include composite towpreg composite materials, towpreg moulded materials or pre-impregnated composite fibres.

In composites industry, a tow is an untwisted (i.e. unidirectional) bundle of continuous filaments, which particularly refer to man-made fibres, such as carbon/graphite fibres. Tows are designated by the number of fibres they contain. For example, a 12K tow contains about 12,000 fibres. Towpreg composite fibres are often woven together, whilst a matrix (e.g. epoxy) is used to bond the composite fibres and other components together. However, known towpreg composite materials have rigid skin layers due to curing of the matrix, thus making the towpreg composite materials difficult for subsequent manufacturing processes. It is thus an objective of the present application to provide towpreg composite materials suitable for their subsequent manufacturing processes without compromising on strength, weight and flexibility of the towpreg materials.

The present invention aims to provide one or more new and useful towpreg composite materials and/or methods related to the towpreg composite materials. According to a first aspect of the invention, the application provides a pre-impregnated composite material (i.e. impregnated composite material or simply composite material) that comprises structural fibres. The structural fibres are attached to each other in the form of a thread and the structural fibres are impregnated with polymer or other types of binder or adhesive material. The polymer includes resin, thermosetting plastics or thermoplastic. The pre-impregnated composite material further comprises a boundary layer that encloses circumference or external/exposed surfaces of the thread. The boundary layer is adhered or joined to the circumference of the thread for reinforcement. The structural fibres may be longitudinally aligned, meaning unidirectional or untwisted. Alternatively, the structural fibres may be longitudinally traversed, meaning crossed or twisted. These structural fibres or functional fibres may be contiguously bundled together, with direct or intimated contact for good adhesion.

Embodiments of the application provide a pre-impregnated composite material or a composite pre-preg tow that comprising structural fibres, one or more of the tows or threads made by the structural fibres are impregnated (pre-preg or pre-impregnated) with the polymer (e.g. resin). The pre-impregnated composite material is further enclosed, coated or sprayed by a boundary layer or skin layer, thereby providing a fibre assembly made of homogeneous tow. The boundary layer may be formed by elongated fibres braided alongside and directly contact the structural fibres. The boundary layer effectively provides a sheath that encloses circumference of the bundled structural fibre.

The pre-impregnated composite material may further comprise a functional interface layer made of functional fibres, which surround the structural fibres, but below the boundary layer. The two layers of functional fibres and the structural fibres have substantially the same direction (i.e. unidirectional) and are closely attached to each other along their length substantially, having no gap in-between the two layers or within each layer, and forming a double-layered structure for reinforcement between the two layers of structural fibres and the functional fibres. The boundary layer effectively provide a neat, uniform and strong outer layer as skin or cylindrical case for enclosing and keeping structural fibres, functional fibres or both of these two types of fibres together. The boundary layer keeps ambient light, air, water and dust from invading the structural or functional fibres. The pre-preg tow (i.e. pre-impregnated composite material) can be made into a multi-strand twisted tow, which can replace ropes or woven into cloth-like sheet (fabric), or further integrated with each other into a 3D skeleton, by lipid infusion, ethers, foam or hydrogel mixture, cured into one piece.

The towpreg composite material has a cured layer (e.g. boundary layer) that can reduce heat dissipation (being poor heat conductor) and fracture. The towpreg composite material provides good thermal insulation, reinforcement structure, shockproof characteristics, anti-infiltration capability and corrosion resistance. The towpreg composite material can prevent porosity and absorb mechanical shocks such that the towpreg composite material has an excellent combination of strength and resilience.

The pre-impregnated composite material can replace metal parts or other high strength materials such as metal casted/moulded parts. For example, the pre-impregnated composite material can provide fibre-reinforced nails, reinforcement ribs. Thermosetting resin or epoxy resin can further enhance material stiffness.

The pre-impregnated composite material may integrate (e.g. casted or moulded) with load-bearing parts (e.g. pipes and ribs) with resin (lipids, ethers, foam, water-curable) as one piece, cured by thermosetting or thermoplastic heat generation.

The towpreg composite material provides a light-weight, strong and robust material that may be in the form of a cable, bar or rope. Both artificial and man-made fibres can be adopted for making the towpreg composite material such that the towpreg composite material can be made according to any predetermined length, such as 30 centimetre, 5 meters or 500 meters coiled on a spool. Impregnated fibres provide structural support or strength, whilst maintaining flexibility. In the meantime, the boundary layer offers protection to the structural fibres such that corrosion, deterioration or degradation is largely prevented or delayed. When adopting strong fibres, such as carbon fibre and ultra-high-molecular-weight polyethylene, the towpreg composite material becomes extremely durable for demanding applications.

The tow of the present application can be formed by a collection of fibres. Depending on specific applications, the tow may be formed of 1000 (1 k) or even more fibres joined (e.g. combined, weaved, bundled or twisted) together. Thickness or diameter of the tow (i.e. pre-impregnated composite material), types of fibres for making the tow or density of the fibres may be determined by requirements arising from the specific applications. Before forming the tow, surfaces of the fibres can be uniformly coated with the resin so that they can closely adhere to each other, to prevent the gaps from existing between the fibres for achieving excellent performance.

Further, embodiments of the application also provides a new composite material, which is poured, immersed or impregnated with esters, ethers, or the hydrogel foam mixture, known as hybrid composite materials. Structural fibres, functional fibres or both then cured. Since the impregnation material is compatible with the resin for binding, the new composite material provides good tensile strength, compression strength, better quality consistency and more excellent mechanical properties. The new composite material that is impregnated with mixture of resins can be widely used in various applications, such as ships, aircraft, motor vehicles, exterior parts, helmets, fibre reinforcement structure or fibre-weaved ropes. The application provides a hybrid curing composites, using adaptive curing technique by means of self-heating of the reactive mixture (e.g. resin mixture). The temperature and pressure adaptive curing process reduces production time and simplifies the production process, which further avoid the issues related to moulding and heat/hot pressing. Therefore, the pre-impregnated composite material can be used in automotive engineering for replacing casting process of large parts. Although curing of the pre-impregnated composite material can be achieved at ambient temperature and pressure, higher temperature or pressure can accelerate the curing process.

The towpreg composite material has the advantages of light weight, low cost, good rigidity, not easily deformed, and being moulding friendly. The towpreg composite material has excellent elastic modulus, compressive strength and impact strength and other properties, and can be used in a variety of applications requiring longitudinal and transverse strength.

The pre-impregnated composite material can further comprise a plurality of longitudinal threads, and a plurality of lateral threads that are weaved with the plurality of longitudinal threads in forming a sheet. Accordingly, the pre-impregnated composite material provides a two dimensional structure as a flat curved or curled sheet material. The sheet material is strong, flexible or both such that wide types of applications can be found for using the pre-impregnated composite material. For example, the pre-impregnated composite material can be used a construction material for attaching walls of a building or house. Since the pre-impregnated composite material can insulate both heat and sound, the house or building can reduce its requirement on thickness for having thick concrete or brick-laid walls.

The boundary layer may comprise functional fibres that are adjoined to each other. Another layer or type of fibres can provide additional layer onto the structural fibres. The two types of fibres may have different mechanical advantages. For example, the structural fibres have good tensile strength, whilst the functional fibres have excellent resilience. When integrated into the same pre-impregnated composite material, this material becomes both strong and resilient. The structural fibre and functional fibres can have different materials or/and provide different technical functions too. For example, the functional fibres are optical fibres, whilst the structural fibres are steel wire(s). Accordingly, the pre-impregnated composite material may obtain different (sometimes contradicting) physical properties. In the present example, the pre-impregnated composite material provides the optical fibres with resilience via the steel wire(s), although optical fibres are often soft and weak.

Functional fibres may form a layer known as interface layer when placed between two layers of materials. In fact, a layer that is positioned between two materials may commonly be known as interface layer. The interface layer or functional fibres affect mechanical properties of the towpreg composite material. The functional fibres may be coated together such that the towpreg composite material is not compromised during handling, processing, storage or transportation. Voids or cracks are prevented from appearing between either the functional fibres or the structural fibres. The interface layer may further prevent or reduce wrinkles on the towpreg composite material so that the towpreg composite material will keep good consistency and mechanical strength when experiencing tension or bending. The towpreg composite material can replace precious metal for making artificial bone, whilst the towpreg composite material can effectively adapt to its surrounding body tissue, reducing the risk of delamination or dislocation. Artificial bones made of the towpreg material can coexist well and compatible (e.g. using carbon fibres) with the surrounding muscle and other tissues, without the danger of experiencing magnetic resonance. The functional interface can further provide damping and reinforcement for reducing the risk of rupture.

The structural fibres, the functional fibres or both can comprise one or more bistable or multistable composite layers for providing one or more cross-ply laminates (i.e. multi-layered composite). The one or more cross-ply laminates can additionally include smart materials embedded in the laminate(s). For example, load adapted smart alloys (NiTi wires) are fixed on top and bottom of the fibres for providing electrical circuits. The adaptive structures of the pre-impregnated composite material can be adjusted to individual technical requirements by designing a load-adapted composite structure. For instance, besides switching between two equivalent cylindrical shapes in the case of [0n/90n] laminates, it can also be switched between two non-equivalent deformation states of [0n/90m] laminates or between bi-stable deformation states of general angle-ply laminates. Thus, the novel adaptive structures offer a high potential for transfer of forces or for usage as components in further adjusting devices, mechanisms, valve flaps or active membranes. Moreover, the structural fibres, the functional fibres or both can provide asymmetric (unsymmetrical) hybrid composite laminates.

The functional interface layer preferably includes the following materials: non-woven fabric, knitted fabric, insulation material (rubber, fabric or plastic), composite with fire-retardant features, fibres, filaments, threads, or mixtures thereof. Compared to the boundary layer, the functional interface layer (or simply interface layer) provides a layer of material on one stratum, film sheet or lamina of material. For example, the interface layer becomes the boundary layer when placed as an outmost layer. In another example, the interface layer is one or more layers of resign, ether, foam or water-curable material between structural fibres and functional fibres.

In another embodiment, the functional interface layer has projections spaced apart on its surface to enhance the ability being integrated into surrounding material. Such functional layer is suitable to be implemented in civil engineering for water-curing (e.g. concrete curing), replacing steel reinforce bars.

In another embodiment, the functional interface layer has an intermediate layer. The intermediate layer may be placed at an inner or outer surface of the functional interface layer, which is also compatible for binding with the functional interface layer. The materials of the intermediate layer may be selected from the group consisting of esters, ethers, gel, and mixtures thereof, and may be in powder or liquid forms (e.g. pigmented emulsion). The intermediate layer may further comprise functional materials such as nanomaterials. The intermediate layer can be applied by spraying or coating the functional interface layer. The intermediate layer may also be able to integrate with the interface layer so that there is no clear separation between the two layers. The intermediate layer can assist with the integration of the interface layer with the towpreg composite material.

The boundary layer can further encloses the functional fibres, the structural fibres or both. The boundary layer or sheet provides an additional film or cover that wraps around the functional fibres, the structural fibres or both. Although resin, adhesive or other materials may be impregnated between fibres, these impregnated material can be damaged or deteriorate over time easily. The boundary layer seals the pre-impregnated composite material from external infiltration or influence, such as light, air, mechanical disturbance or chemical corrosion. Accordingly, lifespan and quality of the pre-impregnated composite material is maintained over prolonged period of usage. Impregnation material includes glue, gel, resin, epoxy, cross-linked or non-cross-linked polymer, reactive resin or reactive polymer (e.g. polyurethane).

The present application provides a pre-preg tow as a composite material. The composite towpreg material comprises one or more a resin infiltrated, sprayed or impregnated fibres. The impregnated, infiltrated or sprayed fibres are bundled together as a strand, covered by a functional interface layer (i.e. boundary layer).The impregnated fibres with the cladding interface layer form a rope or cable. In other words, the towpreg composite material has one or more resin-impregnated fibres and coating in forming a tow. One or more such tows are integrated with boundary layer.

The structural fibres, the functional fibres or both can be pre-impregnated with thermosetting polymer, thermoplastic or both. Once formed, the thermosetting polymer cannot be reshaped or recycled. In contrast, the thermoplastic can be reused after solidification. Additionally, the thermoplastic material (e.g. resin) is typically soft and sticky, not suitable for machining or secondary processing. In the present application, the structural fibres, the functional fibres or both utilises thermoplastic for pre-impregnation, and employs thermosetting polymer to provide an external crust or reinforced thermoplastic material for better machinability. In fact, a mixture of thermoplastic and thermosetting polymer provide an unique composite material, which be cured together with the fibres. Resultant composite materials are suitable for machining, as well as having flexibility. The thermosetting polymer, thermoplastic material or a mixture of both can have strong bonding with paper fibres. In use, thermosetting plastic and thermoplastic material may be sequentially applied to the fibres, in forms mixture, semi-solid or solid. Both the thermosetting plastic and thermoplastic material may be cured together with paper fibres with excellent adhesion.

Additionally, the structural fibres, the functional fibres or both may be pre-impregnated with water-based or water-cured composite material. The water-based composite material may possibly adopt cement, plaster or mortar. The water-based composite material offers excellent construction material that is light-weight and sturdy.

The structural fibres, the functional fibres or both may comprise paper fibres that are a component of the composite material. The paper fibres may be in the form of flat sheet paper as rolled up. Paper fibres are natural fibres, which are environmentally friendly. The paper fibres offer excellent flexibility for packaging, good structural integrity for protection, long durability for long-term storage, high density for gas or liquid insulation, low thermal conductivity for heat insulation. The paper fibres can recycled, and abundantly available at low cost. The natural fibres include vegetable fibres (e.g. cotton, hemp, jute, flax, ramie, sisal, bagasse, and banana), wood fibres (e.g. groundwood, thermos-mechanical pulp (TMP) and bleached or unbleached kraft or sulfite pulps), animal fibres (e.g. silkworm silk, spider silk, sinew, catgut, wool, sea silk and hair such as cashmere wool, mohair and angora, fur such as sheepskin, rabbit, mink, fox, beaver, etc.) and mineral fibres (e.g. asbestos). Of course, man-made fibres are also suitable for providing the pre-impregnated composite material. Examples of the man-made fibres include semi-synthetic fibres (e.g. rayon), cellulose regenerated fibre (rayon, bamboo fibre, Lyocell, Modal, diacetate fibre, triacetate fibre.), synthetic fibres (made from synthetic materials such as petrochemicals), metallic fibres (drawn from copper, gold or silver or extruded or deposited from nickel, aluminium or iron), carbon fibres, silicon carbide fibre, fiberglass, and polymer fibres. Basaltic fibres are also suitable for the invention. Polymer fibres are often made from polyamide nylon, PET or PBT polyester, phenol-formaldehyde (PF), polyvinyl chloride fibre (PVC) vinyon, polyolefins (PP and PE) olefin fibre, acrylic polyesters, aromatic polyamids (aramids) (e.g. Twaron, Kevlar and Nomex), polyethylene (PE), HMPE (e.g. Dyneema or Spectra), elastomers (e.g. spandex), polyurethane fibre, elastolefin and coextruded fibres.

The paper fibres can comprise paper-cords (e.g. made by flatten paper) that can be further blended or impregnated with resign or adhesive. The paper fibres are cellulose fibres from wood, fibre crops or recycled waste paper, which are one of the most abundant raw materials worldwide. Particularly, the paper fibres comprise sack kraft paper or kraft paper with high strength and durability. Wood pulp for sack paper is made from softwood by the kraft process. Long fibres of kraft paper provides strength to kraft paper cords and wet strength chemicals further improve the strength of the kraft paper cords. Particularly, the kraft paper cords provide high tensile strength, high elasticity and high tear resistance at low cost. The kraft paper cord further has good adhesion with impregnating materials, such as resin, epoxy or foam.

The structural fibres, the functional fibres or both may comprise a fibre reinforcing core. The reinforcing core comprises one or more vegetable fibres, carbon fibres, metal filaments or glass fibres or a combination of any of these. The reinforcing core may have different structures, such as tubular, twisted wire, unidirectional threads, weaved fibres or a combination of any of these. For example, the fibre reinforcing core comprises a kraft paper twisted cord that provides flexibility and good tensile strength to the pre-impregnated composite material.

The towpreg composite material may also be alternately braided together to form braided moulding material. Continuously braided reinforcement layer of the towpreg composite material may prevent issues of shrinkage, deformation or cracking due to large uneven surface.

The pre-impregnated composite material can further comprise a surface layer that encloses the boundary layer for covering. Alternatively speaking, the surface layer can be an external part of the boundary layer or integrated with the boundary layer for providing additional function to the pre-impregnated composite material. For example, the surface layer can be non-woven fabric, textile, composite, decorative woven fabric, flock, PU decorative layer, self-skinning polyurethane, fibres, threads, yarns or a combination of any of these.

The boundary layer may comprise undulation (e.g. roughness, protrusion or valleys) on its exposed external surface for improving adhesion with other material or structure. Unevenness (in contrast with smoothness) of the boundary layer enables the pre-impregnated composite material to join with other materials or structures, such as concrete or foam.

The undulation can comprise protrusions, fibrous bulges, flakes, films, coatings, fibrous strata, impregnated layers, rough areas, valleys, crevice or a combination of any of these. For example, the undulation includes hooks and/or loops, similar to the structure or appearance of Velcro. When made into artificial bones, the undulation improves connection between the pre-impregnated composite material and its surrounding body tissues.

The boundary layer, the surface layer or both layers have exposed fibres or protruding for improving bonding or adhesion. The exposed fibres or outspreading fibres resemble braches, pricks, or grass that extend from a base surface of the boundary layer or the surface layer. When joining with external parts, such as adhesive, the exposed fibres may form strong bondage or linkage so that the composite material attaches well and strong with the external parts. The exposed fibres are similar to exposed rebars of concrete slabs, which improve strength of joints.

The resin may comprise thermosetting resin, thermoplastic resin (thermoplastics),reactive resin (e.g. photosensitive resin or photo-curable Resin), reactive epoxy, epoxy resin, hybrid resin, thermoplastic resin, gel (gelatin, hydrogel), solidified fat or a combination of any of these substances. These types of resin provides diverse types of physical and chemical properties to suit various applications. The reactive resin comprises ester, ether, foamed plastics or water-cured mixture (e.g. concrete). The structural or functional fibres include glass fibres, basalt fibres, carbon fibres, biomass fibres, metal fibres/wire/cable, and a combination of any of these.

Resin may be kept as semi-solid during manufacturing process of the pre-impregnated composite material. The semi-solid material may be simply known as gel. The gel provides flexibility, softness and good tensile strength of the pre-impregnated composite material. For example, unsaturated (non-saturated) resin, lipids, ether and hydrogel adhesives (such as a biological extract), polyurethane, silicone gel, and mixtures thereof are suitable.

The structural fibres, the functional fibres or both can comprise natural fibres, man-made fibres, or a combination of both. For example, the natural fibres comprise vegetable fibres, wood fibres, animal fibres, metal fibres or a combination of any of these. For instance, the man-made fibres comprise semi-synthetic fibres, cellulose regenerated fibres, synthetic fibres or a combination of any of these. The structural fibres, the functional fibres or both can further include metallic fibre, carbon fibres, silicon carbide fibre, fibreglass, mineral fibres, polymer fibres, microfibers, basalt fibre or a combination of any of these. Combination or integration of these fibres may offer unique mechanical or chemical properties for specific usage.

The pre-impregnated composite material may be a knitted material, a laid material, a fleece or a woven material, with linen binding including warp threads or filling threads configured as threads which form a monofilament composite including the plurality of individual filaments and the non-crosslinked resin. The individual filaments of all the threads may be further aligned to the same direction (i.e. being unidirectional).

The pre-impregnated composite material can be a sandwich material that includes one or more layers of a knitted material, a laid material, woven material and a fleece. The one or more layers can include threads with a plurality of individual filaments, non-crosslinked resin. These layers can be connected through bridges including the resin between adjacent threads or fibres of adjacent layers to form the pre-impregnated composite material. Accordingly, the pre-impregnated composite material becomes multi-layered in the form of a cable or sandwich board.

Shapes of the pre-impregnated composite material comprise a sheet, a film, a multi-layered structure, fibre layered, powder layered, coated layer, impregnated layer or combination of any of these layers. Internal, middle (interfacial) or external layer of the pre-impregnated composite material comprises a material selected from: a non-woven fabric; knitted fabric; flame retardant material, (heat, electricity or fluid) insulation material, reinforced/reinforcing functional composites; and mixtures thereof. The fibres include biomass fibres, organic fibres filaments or threads. The boundary layer may further comprise an intermediate layer.

The structural fibres, the functional fibres or both may be twisted, braided or bundled (joined together but untwisted). Embodiments of the application can provide pre-impregnated composite material(i.e. pre-preg tow)that may have rope-like structure (i.e. fibres or threads twisted over each other in forming one cord), with or without weaving process. The rope-like structure can prevent moisture and dust infiltration, delay oxidation process and reducing effect of ultraviolet radiation to the pre-impregnated composite material, thus prolonging lifespan of the material.

Embodiments of the application provide a pre-impregnated composite material in the form of rope, cable or bundle of optical fibre. Therefore, the pre-impregnated composite material can provide multiple functions, integrating functions of rope, cable or optical fibres together.

Embodiments of the application provide a pre-impregnated composite material also provides a fibre reinforced structure. After curing, the composite material can replace metal (e.g. copper) and steel cables. For example, the interface layer (i.e. layer of functional fibres) can effectively combine steel and concrete together. When coated with carbon material, the pre-impregnated composite material can be used as artificial bone, replacing ceramics or metallic alloys.

Thepre-impregnated composite material can significantly reduce weight while providing comparable strength as metal. In addition, electrically or light conductive fibres may also be added into the towpreg composite material to form electrically conductive or light conductive (optical) cables.

The pre-impregnated composite material may additionally include nanoparticles, nanofibers or both that are integrated with one or more layers of the pre-impregnated composite material. When added to the pre-impregnated composite material, the nanoparticles or nanofibers can strongly influence mechanical properties of the material, such as the stiffness or elasticity. For example, the pre-impregnated composite material can be reinforced by carbon nanotubes resulting in novel materials which can be used as lightweight replacements for metals. Such composite materials may enable a weight reduction accompanied by an increase in stability and improved functionality. In practice, the nanoparticles, nanofibers or both comprise graphene or carbon nanotubes.

Embodiments of the invention further provide the polymer, the boundary layer, the interface layer or a combination of any of these comprises a mixture of thermoplastic resin and thermosetting resin. The thermoplastic resin comprises PE, PP, PVC, ABS, PMMA, PA, PC, POM, PET and PBR, whilst the thermosetting resin comprises PF, UF, MF, EP and UP. Cured or solidified composite materials with the mixture of thermoplastic resin and thermosetting resin provide reinforced structure which is also easy to shape or machine.

According to another aspect of the invention, the present application provides a method for producing a pre-impregnated composite material that includes fibres and a resin connecting the fibres. The method comprises following steps:
- using threads which respectively include a monofilament composite including a plurality of individual filaments which are held together through a resin that is crosslinkable under an impact of at least one physical variable or a chemical substance, wherein the individual filaments of a thread are respectively aligned to the same direction (being unidirectional); and
- forming the pre-impregnated composite material from the threads in that adjacent threads are connected with one another at contact surfaces of their outer enveloping surfaces through bridges of the resin provided in non-crosslinked condition, the resin forming the bridges previously formed a portion of the threads; and
- enclosing the outer enveloping surfaces of the threads by a boundary layer.

The method provides a convenient and reliable technique for making the pre-impregnated composite material. Furthermore, the method may include an additional step of treating the boundary layer or enclosing the boundary layer with a skin layer. The treating or enclosing step can be achieved by coating, spraying, heating, mechanical cutting, grinding, painting, sanding, chilling or other surface making techniques.

Embodiments of the application also provide a method for preparing pre-impregnated composite material (pre-preg tow functional composite material) which comprises following steps:
a. providing one or more fibres,
b. immersing the one or more fibres into a liquid resin material or by coating the one or more fibres with the resin material such that the one or more fibres are impregnated with the resin;
c. forming at least one tow from the impregnated fibres; and
d. enclosing the at least one tow by a boundary layer to form the pre-impregnated tow composite material.
Here, the resin or coating may be cured or pre-cured.

Impregnating fibres with a resin material is also called pre-preg process. The pre-preg (i.e. prepreg) process may be carried out by directly immersing fibres into liquid resin. The fibres may be dipped, sprayed or drenched with resin liquid or powder. Each fibre should be sufficiently coated or impregnated so that surfaces of the fibres are uniformly covered with the resin, thereby bonding the fibres to each other subsequently.

Embodiments of the application further provide a method of making hybrid curing composites (composite materials). The method includes a step of weaving functional fibres, structural fibres or both into one or more sheets. These sheet composites are then joined together in forming a three dimensional (3D) structure, which is subsequently impregnated and further cured with one or more types of resin(s), ether(s), (hydrogel) form, and/or water-curable material (e.g. concrete). The 3D structure thus becomes robust against tearing and vibration, light-weight and resistive to corrosion.

The step of enclosing the outer enveloping surfaces of the threads by a boundary layer can comprise a step of providing a mould for shaping or curing the pre-impregnated composite material. Since the mould offers predetermined shapes with precise dimensions, the pre-impregnated composite material can provide diverse types of structures with complexity, precision and elasticity.

The method may further comprise a step of curing with pre-impregnated composite material sequentially with a thermoplastic resin, a thermosetting resin or a mixture of both the thermoplastic resin and the thermosetting resin. The materials may be sequentially applied or cured, or mixed and applied simultaneously. The thermosetting resin provides structural integrity and excellent machinability, and the thermoplastic resin offers good adaptability by reshaping, injection moulding, compression moulding, calendering and extrusion. For example, the structural fibres may be impregnated with thermoplastic resin and cured, followed by wrapping and curing with thermosetting resin. The resultant pre-impregnated composite material has strong crust or shell protection, as well as the core of thermoplastic resin impregnated structural fibres.

The accompanying figures (Figs.) illustrate embodiments and serve to explain principles of the disclosed embodiments. It is to be understood, however, that these figures are presented for purposes of illustration only, and not for defining limits of relevant inventions.
- Fig. 1: illustrates a first tow of pre-preg fibres;
- Fig. 2: illustrates surface structure of the first tow of pre-preg fibres;
- Fig. 3: illustrates a second tow of pre-preg fibres;
- Fig. 4: illustrates an exposed woven composite material with pre-preg fibres;
- Fig. 5: illustrates a cross-sectional view of the woven composite material; and
- Fig. 6: illustrates another cross-sectional view of the woven composite material.

Exemplary, non-limiting embodiments of the present application will now be described with references to the above-mentioned figures.

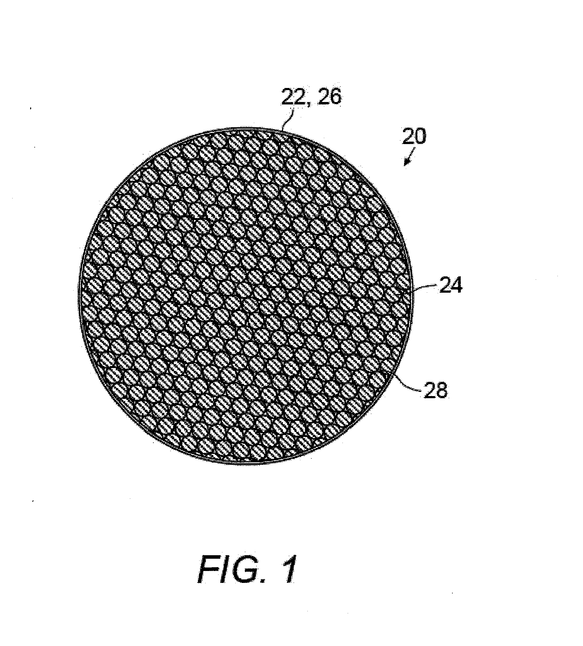

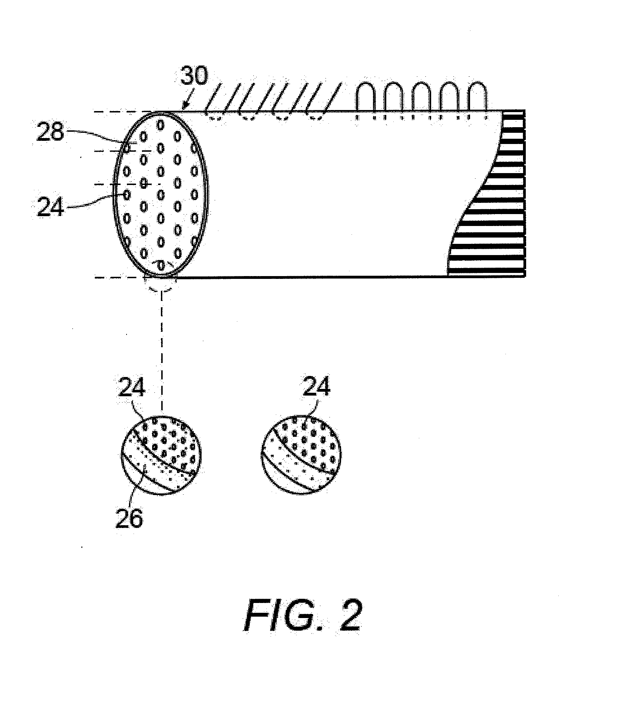

Figs. 1 & 2 relate to a first embodiment of the present application. In particular, Fig. 1 illustrates a first tow 20 of pre-preg fibres. Only a cross-section of the first tow 20 is depicted such that structure of the first tow 20 becomes visible. The first tow 20 comprises a boundary layer 22 and a bundle of fibres 24. The boundary layer 22 comprises epoxy resin (also known as polyepoxides) 26 that wraps around the bundle of fibres 24 as a sleeve. Accordingly, none of these fibres 24 is exposed to the exterior such that these fibres 24 are sealed from ambient light, air or dust by the boundary layer 22. In contrast, the bundle of fibres 24 comprises glass fibres 24 that include numerous extremely thin fibres of glass (e.g. fibre with radius of 20 to 60 nanometres). These glass fibres 24 are formed when thin strands of silica-based glass are extruded into many fibres with small diameters suitable for textile processing. The bundle of glass fibres 24 is impregnated with thermosetting plastic 28(also known as thermoset) that fills void space between the fibres 24 and joins these fibres 24 together into a single strand. Particularly, the thermosetting plastic 28 includes polyester.

Referring to Fig. 2, the boundary layer 22 comprises a rough external surface 30. Particularly, the rough external surface 30 is covered with numerous lumps, short fibres, hooks of short fibres and loops of short fibres. These hooks and loops of short fibres are similar to the appearance of Velcro hooks and Velcro loops.

When making the first tow 20 of pre-preg fibres, the bundle of glass fibres 24 are firstly provided, which are loosely put together. The bundle of glass fibres 24 are impregnated with the thermoplastic resin 28. Before complete curing, the bundle of fibres 24 are further enclosed with the epoxy resin 26, which is subjected to hot air of about 150 °C. The lumps, short fibres, hooks of short fibres and loops of short fibres 30 are made by a loom that could automatically weave the epoxy appropriately and then trim the loops. During the curing process, the boundary layer 22 is partially integrated with the thermosetting plastic 28 such that the first tow 20 becomes an unitary body.

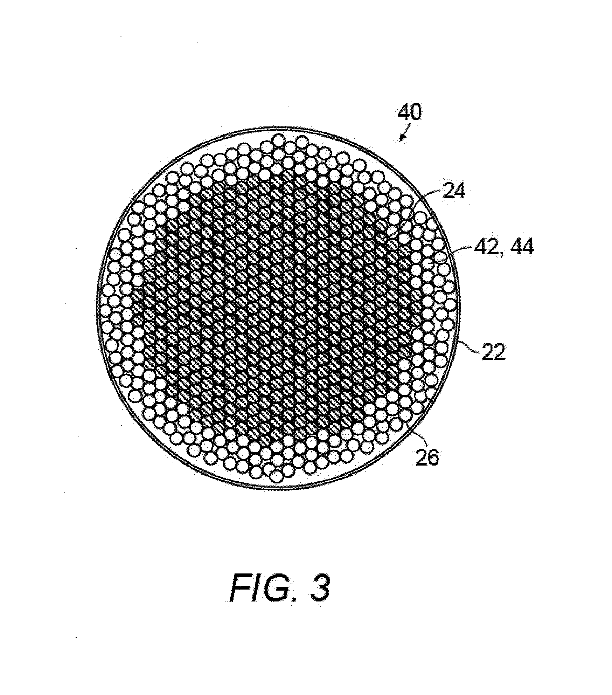

Fig. 3 illustrates a second tow 40 of pre-preg fibres, which is also a sectional view of the second tow 40. The second embodiment comprises parts or method steps that are similar or identical to those of the first embodiment. These parts or method steps are indicated by similar or identical reference numerals. Accordingly, description of the similar or identical parts or steps is hereby incorporated by reference, wherever appropriate.

In detail, the second tow 40 comprises a bundle of glass fibres 24, a layer of functional fibres 42 and a boundary layer 22 that sequentially joined together radially from centre to border of the second tow 40. Particularly, the bundle of glass fibres 24 form a core of the second tow 40, whist these fibres 24 are impregnated with the thermoplastic resin 28. The bundle of glass fibres 24 are also known as structural fibres 24 because they provide structural foundation to the second tow 40. Next to the structural fibres 24, the functional fibres 42 form a sleeve that encloses the structural fibres 24. The functional fibres 42 comprises rattan fibres (natural fibres) 42 that are joined together by ether 44. Similar to the first tow 20, the second tow 40 also has a boundary layer 22 that wraps around the sleeve of functional fibres 42.

When making the second tow 40 of pre-preg fibres, the bundle of glass fibres 24 are initially provided, which are loosely laid out. The bundle of glass fibres 24 are impregnated with the thermoplastic resin 28. Before complete curing, the bundle of fibres 24 are further enclosed with the functional fibres 42. Ether 44 is additionally provided onto the functional fibres 42. Before curing of the thermoplastic resin 28 and the ether 44, the sleeve of functional fibres 42 are further enclosed with the epoxy resin 26, and subjected to hot air of about 150 °C. During the curing process, the boundary layer 22, the layer of functional fibres 42 and the layer of structure fibres 24 are partially integrated with each other such that the second tow 20 becomes an unitary body.

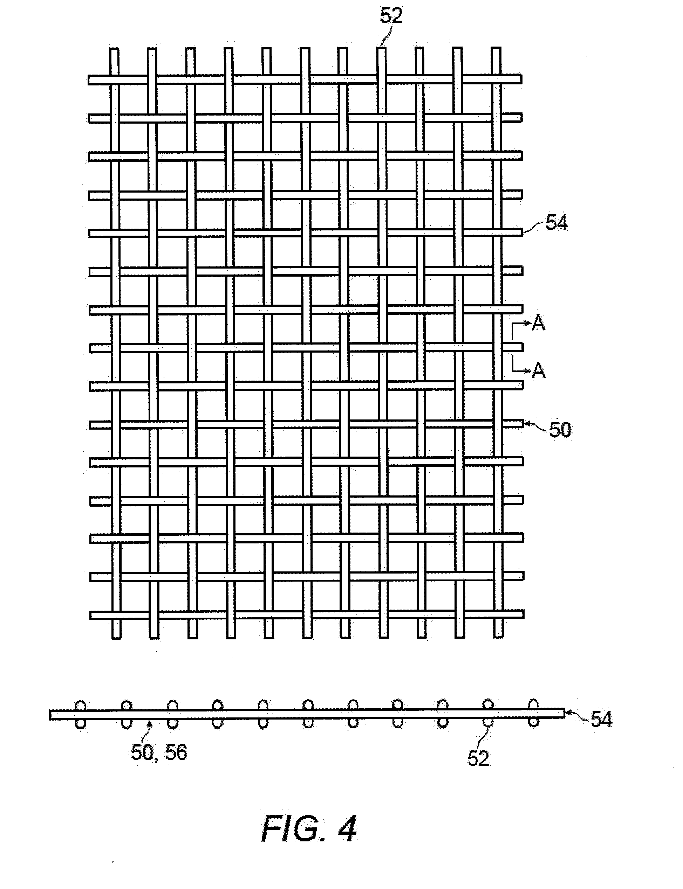

Fig. 4 illustrates an exposed woven composite material 50 with pre-preg fibres, which is a third embodiment of the present application. The third embodiment comprises parts or method steps that are similar or identical to those of other embodiments. These parts or method steps are referred by similar or identical reference numerals. Accordingly, description of the similar or identical parts or steps is hereby incorporated by reference, wherever suitable.

The exposed woven composite material 50 comprises a longitudinal array 52 of paper cords, and a lateral array 54 of paper cords. The longitudinal array 52 of paper cords are intertwined or woven with the lateral array 54 of paper cords such that the a longitudinal array 52 of paper cords and a lateral array 54 of paper cords are substantially perpendicular to each other respectively. Accordingly, the longitudinal array 52 of paper cords and the lateral array 54 of paper cords form a web of paper cords 56, which is a flexible sheet material.

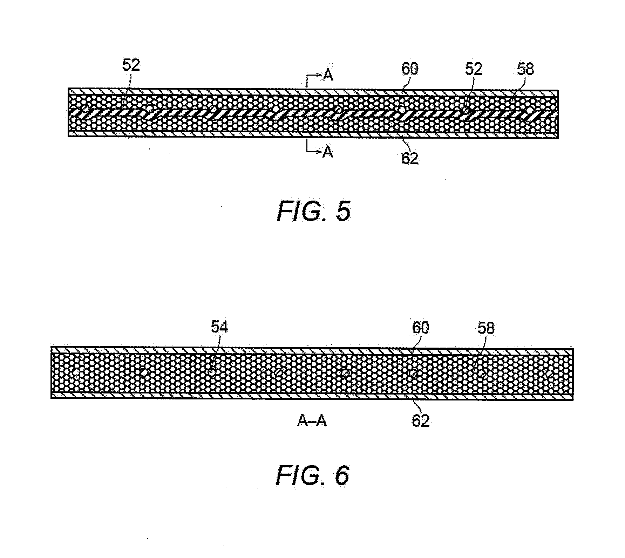

Fig. 5 illustrates a cross-sectional view of the woven composite material 50. Moreover, Fig. 5 depicts opposite sides (i.e. top and bottom) of the web of paper cords 56 are covered by polyurethane 58 such that the web of paper cords 56 are sealed from its ambient environment (e.g. air, light and dust). Besides, a first (top) boundary layer 60 and a second (bottom) boundary layer 62 are cover the web of paper cords 56 and the polyurethane 58 from opposite sides in providing one single composite sheet material 64. The single composite sheet material 64 is bendable and robust for being rolled up around a cylinder.

Fig. 6 illustrates another cross-sectional view of the woven composite material 50. This cross-sectional view exposes segmented papers cords 56 having circular profiles. These paper cords 56 are surrounded by the polyurethane 58, which is further enclosed by the two boundary layers 60, 62.

When making the woven composite material 50, the longitudinal array 52 of paper cords and the lateral array 54 of paper cords are provided and weaved into a sheet form. This sheet is further cut into predetermined length and width. The polyurethane 58 is further moulded with the sheet, whilst the two boundary layers 60, 62 additionally are additionally attached to the polyurethane 58 for curing. After the curing, the woven composite material 50 is cleaned at its edges and broad surfaces such that the woven composite material 50 is ready for interior decoration or other applications.

In the application, unless specified otherwise, the terms "comprising", "comprise", and grammatical variants thereof, intended to represent "open" or "inclusive" language such that they include recited elements but also permit inclusion of additional, non-explicitly recited elements.

As used herein, the term "about", in the context of concentrations of components of the formulations, typically means +/- 5% of the stated value, more typically +/- 4% of the stated value, more typically +/- 3% of the stated value, more typically, +/- 2% of the stated value, even more typically +/- 1 % of the stated value, and even more typically +/- 0.5% of the stated value.

Throughout this disclosure, certain embodiments may be disclosed in a range format. The description in range format is merely for convenience and brevity and should not be construed as an inflexible limitation on the scope of the disclosed ranges. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

It will be apparent that various other modifications and adaptations of the application will be apparent to the person skilled in the art after reading the foregoing disclosure without departing from the spirit and scope of the application and it is intended that all such modifications and adaptations come within the scope of the appended claims.

The present invention relates to following embodiments. According to one aspect, the application provides a pre-impregnated tow composite material that comprises structural fibres, which are attached to each other in the form of a thread. The structural fibres are impregnated with resin. The pre-impregnated tow composite material further comprises a boundary layer that encloses circumference of the thread. The boundary layer is adhered to a circumference of the thread for reinforcement.

The pre-impregnated tow composite material can further comprise a plurality of longitudinal threads, and a plurality of lateral threads that are weaved with the plurality of longitudinal threads in forming a sheet.

The boundary layer may comprise functional fibres that are adjoined to each other.The boundary layer can further comprise an interface layer that encloses the functional fibres, the structural fibres or both.The structural fibres, the functional fibres or both may comprise paper fibres.The paper fibres can comprise wound paper cords.

The structural fibres, the functional fibres or both can comprise a fibre reinforcing core. The pre-impregnated tow composite material may further comprise a surface layer that encloses the boundary layer for covering. The boundary layer can comprise undulation on its external surface for improving adhesion. The undulation may comprise protrusions, fibrous bulges, flakes, films, coatings, fibrous strata, impregnated layers, rough areas, valleys, crevice or a combination of any of these.

The resin can comprise thermosetting resin, epoxy resin, hybrid resin, thermoplastic resin, gel or a combination of any of these substances. The structural fibres, the functional fibres or both may comprise natural fibres, man-made fibres, or a combination of both. The natural fibres can comprise vegetable fibres, wood fibres, animal fibres, metal fibres or a combination of any of these. The man-made fibres may comprise semi-synthetic fibres, cellulose regenerated fibres, synthetic fibres or a combination of any of these. The structural fibres, the functional fibres or both can comprise basaltic fibre.

The pre-impregnated tow composite material may be a knitted material, a laid material, a fleece or a woven material, with linen binding including warp threads or filling threads configured as threads, which form a monofilament composite including the plurality of individual filaments and the non-crosslinked resin. The individual filaments of all the threads are aligned to the same direction.

The pre-impregnated composite materialcan be a sandwich material including at least one layer including a knitted material, a laid material and at least one layer including a fleece. The knitted material, the laid material or the woven material may only include the threads which include a plurality of individual filaments and the non-crosslinked resin, whilst the fleece is provided with anon-crosslinked resin. The layers are connected through bridges including the resin between adjacent threads or fibres of adjacent layers to form the pre-impregnated tow composite material. In the embodiments, the structural fibres, the functional fibres or both can be twisted.

The boundary layer may comprise a material selected from: non-woven fabric, knitted fabric, composite material, fibres, filaments, threads, or mixtures thereof. The boundary layer can further comprises, in its internal layer, an intermediate layer.

According yet another aspect, the application provides a method for producing a pre-impregnated tow composite material that comprises following steps.
- A first step of using threads which respectively include a monofilament composite having a plurality of individual filaments being held together through a resin that is crosslinkable under an impact of at least one physical variable or a chemical substance, wherein the individual filaments of a thread are respectively aligned to the same direction;
- A second step of forming the pre-impregnated tow composite material from the threads in that adjacent threads are connected with one another at contact surfaces of their outer enveloping surfaces through bridges of the resin provided in non-crosslinked condition, the resin forming the bridges previously formed a portion of the threads; and
- A third step of enclosing the outer enveloping surfaces of the threads by a boundary layer.

Some of these steps may be changed in sequence or performed simultaneously.

## Claims

1. Pre-impregnated composite material comprising
- structural fibres that are attached to each other in the form of a thread, the structural fibres being impregnated with a polymer; and
- a boundary layer that encloses a circumference of the thread,
wherein the boundary layer is adhered directly to the circumference of the thread for reinforcement.

2. Pre-impregnated composite material of Claim 1 further comprising
a plurality of longitudinal threads, and
a plurality of lateral threads that are weaved with the plurality of longitudinal threads in forming a sheet.

3. Pre-impregnated composite material of Claim 1, wherein
the boundary layer comprises functional fibres that are adjoined to each other, and aligned with the structural fibres longitudinally and contiguously.

4. Pre-impregnated composite material of Claim 1 or 3, wherein
the boundary layer further comprises an interface layer that encloses the functional fibres, the structural fibres or both.

5. Pre-impregnated composite material of any of the preceding claims, wherein
the structural fibres, the functional fibres or both comprise multistable composite layers for providing at least one cross-ply laminate.

6. Pre-impregnated composite material of any of the preceding claims, wherein
the structural fibres, the functional fibres or both are pre-impregnated with thermosetting polymer, thermoplastic or both.

7. Pre-impregnated composite material of any of the preceding claims, wherein
the structural fibres, the functional fibres or both are pre-impregnated with water-based composite material.

8. Pre-impregnated composite material of any of the preceding Claims, wherein
the structural fibres, the functional fibres or both comprise paper fibres.

9. Pre-impregnated composite material of any of the preceding claims, wherein
the structural fibres, the functional fibres or both comprise a fibre reinforcing core.

10. Pre-impregnated composite material of any of the preceding claims, wherein
the boundary layer, the surface layer or both comprises undulation on their external surfaces for improving adhesion.

11. Pre-impregnated composite material of any of the preceding claims, wherein
the boundary layer, the surface layer or both comprises exposed fibres for improving adhesion.

12. Pre-impregnated composite material of any of the preceding claims,
wherein the pre-impregnated composite materialis a knitted material, a laid material, a fleece or a woven material, with linen binding including warp threads or filling threads configured as threads which form a monofilament composite including the plurality of individual filaments and the non-crosslinked resin, and
wherein the individual filaments of all the threads are aligned to the same direction.

13. Pre-impregnated composite material of any of the preceding claims,
wherein the pre-impregnated composite material is a sandwich material including at least one layer including a knitted material, a laid material and at least one layer including a fleece,
wherein the knitted material, the laid material or the woven material only includes the threads which include a plurality of individual filaments and the non-crosslinked resin and the fleece is provided with a non-crosslinked resin, and
wherein the layers are connected through bridges including the resin between adjacent threads or fibres of adjacent layers to form the pre-impregnated composite material.

14. Method for producing a pre-impregnated composite material including fibres and a resin connecting the fibres, comprising:
- using threads which respectively include a monofilament composite including a plurality of individual filaments which are held together through a resin that is crosslinkable under an impact of at least one physical variable or a chemical substance, wherein the individual filaments of a thread are respectively aligned to the same direction;
- forming the pre-impregnated composite material from the threads in that adjacent threads are connected with one another at contact surfaces of their outer enveloping surfaces through bridges of the resin provided in non-crosslinked condition, the resin forming the bridges previously formed a portion of the threads; and
- enclosing the outer enveloping surfaces of the threads by a boundary layer.

15. Method of Claim 14, wherein
the enclosing the outer enveloping surfaces of the threads by a boundary layer comprises providing a mould for shaping or curing the pre-impregnated composite material.
